Europäisches Patentamt

(19) European Patent Office  (11) Numéro de publication: **0 156 714**

Office européen des brevets  **A1**

(12) **DEMANDE DE BREVET EUROPEEN**

(21) Numéro de dépôt: **85400451.2**  (51) Int. Cl.⁴: **A 01 G 9/12**
**F 16 B 7/04**

(22) Date de dépôt: **08.03.85**

(30) Priorité: **09.03.84 FR 8403660**

(43) Date de publication de la demande:
**02.10.85 Bulletin 85/40**

(84) Etats contractants désignés:
**AT BE CH DE FR GB IT LI LU NL SE**

(71) Demandeur: **NORTENE Société Anonyme dite:**
**149, avenue de Bretagne**
**F-59000 Lille(FR)**

(72) Inventeur: **Pavy, Michel**
**11, rue Louis Pergaud**
**F-59139 Wattignies(FR)**

(74) Mandataire: **Nony, Michel**
**Cabinet Nony 29, rue Cambacérès**
**F-75008 Paris(FR)**

(54) Dispositif d'alignement et de liaison de profiles, notamment en matière plastique, pour la réalisation de treillages et procédé pour sa mise en oeuvre.

(57) Il comprend une pièce de liaison (3), de préférence en matière plastique, susceptible d'être engagée sur les extrémités de deux profilés (1) successifs, ladite pièce de liaison présentant une âme (10) dont la face intérieure présente un profil correspondant au profil de la face frontale (4) des profilés et deux ailes latérales (13) repliées dont le profil correspond au profil des flancs latéraux (6) desdits profilés.

Fig. 8

- 1 -

Dispositif d'alignement et de liaison de profilés, notamment en matière plastique, pour la réalisation de treillages et procédé pour sa mise en oeuvre.

**0156714**

La présente invention est relative à un dispositif d'alignement et de liaison de profilés, notamment en matière plastique, pour la réalisation de treillages, ainsi qu'à un procédé pour sa mise en oeuvre..

On utilise couramment pour réaliser des treillages décoratifs et/ou servant de supports à des plantes grimpantes, des profilés, notamment en matière plastique, disposés selon deux ensembles croisés de rangées parallèles.

En leurs points de croisement les profilés sont traversés, de préférence au travers d'orifices ménagés à cet effet dans le corps du profilé, par des tiges qui d'une part constituent un axe d'articulation entre les deux éléments profilés se croisant, et d'autre part pénètrent dans le mur pour assurer la fixation du treillage sur celui-ci.

Les tiges peuvent être, par exemple, des vis pénétrant dans le mur, si nécessaire avec utilisation d'une cheville à expansion engagée dans un perçage réalisé dans le mur. Des entretoises peuvent être prévues pour positionner le treillage à une distance prédéterminée du mur.

La société déposante commercialise ainsi sous la dénomination de "CROISIKIT" des profilés creux en matière plastique de section aplatie à flancs arrondis et comportant des cloisons internes sensiblement orthogonales aux faces principales frontale et arrière du profilé et définissant dans le profilé des conduits longitudinaux.

De tels profilés sont fournis pour des raisons d'encombrement en longueur déterminée relativement courte, notamment de 1 mètre.

Pour couvrir des surfaces de murs importantes, il est donc nécessaire d'aligner longitudinalement et de relier de tels profilés mis bout-à-bout.

A cet effet, on utilise habituellement des aiguilles raccords s'engageant dans deux profilés successifs, par exemple dans les conduits longitudinaux centraux des profilés.

L'utilisation de telles aiguilles raccords dans la pratique n'est pas totalement satisfaisante dans la mesure ou d'une part celles-ci exigent une manipulation assez délicate et que d'autre part la liaison et l'alignement obtenus ne sont pas toujours parfaits.

La présente invention se propose de réaliser un dispositif d'assemblage de profilés pour la réalisation de treillages assurant de manière simple et économique une bonne liaison de deux profilés successifs ainsi qu'un excellent alignement entre eux.

Le dispositif selon l'invention se caractérise par le fait qu'il comprend une pièce de liaison, de préférence en matière plastique, susceptible d'être engagée sur les extrémités de deux profilés successifs

- 2 -

**0156714**

ladite pièce de liaison présentant une âme dont la face intérieure présente un profil correspondant au profil de la face frontale des profilés et deux ailes latérales repliées dont le profil correspond au profil des flancs latéraux desdits profilés.

Ainsi selon l'invention la pièce de liaison s'engage en correspondance de formes sur les deux profilés successifs en recouvrant leurs faces frontales et leurs flancs latéraux, un coulissement relatif de la pièce de liaison et des profilés assemblés restant ainsi possible, notamment pour ajuster le positionnement axial des profilés.

Dans un mode de réalisation particulier dans lequel les profilés présentent des flancs latéraux convexes, la pièce de liaison présentant sensiblement la forme d'un C allongé, la courbure des ailes de ladite pièce correspondant à celle des flancs des profilés, la longueur desdites ailes étant déterminée de façon que, en position assemblée, les extrémités des ailes s'étendent sensiblement au niveau de la face arrière des profilés, c'est-à-dire la face destinée à être tournée vers le mur sur lequel est réalisé ce treillage.

Dans un mode de réalisation préféré de l'invention les profilés et les pièces de liaison sont réalisés en une même matière plastique, par exemple en chlorure de polyvinyle.

L'épaisseur de la paroi de la pièce de liaison est de préférence déterminée pour permettre un engagement par encliquetage sur les profilés mis bout-à-bout, de façon à permettre après engagement d'une des ailes de la pièce de liaison autour d'un des flancs latéraux de deux profilés mis bout-à-bout, d'engager après pivotement la pièce de liaison de l'autre aile, par encliquetage, sur le flanc latéral opposé des profilés.

La longueur de la pièce de liaison selon l'invention peut être par exemple comprise entre 20 et 70 mm et son épaisseur de paroi de l'ordre d'environ 1 mm.

Dans un second mode de réalisation, la pièce de liaison comporte en outre une languette disposée parallèlement à ses faces d'extrémité, en saillie de la face intérieure de son âme, ladite languette étant disposée de préférence à mi-longueur de la pièce de liaison et étant destinée à se placer entre les deux profilés à assembler. On évite ainsi tout risque de glissement de la pièce de liaison sur les profilés sur lesquels elle est mise en place.

Les pièces de liaison dans ce second mode de réalisation peuvent être relativement courtes et réalisées en une autre matière plastique que les profilés, par exemple, en polyéthylène.

Dans le but de mieux faire comprendre l'invention on va maintenant en décrire à titre d'exemple en aucune manière limitatif un mode de réalisation en se référant au dessin annexé dans lequel :

- la figure 1 illustre un treillage réalisé en mettant en oeuvre des dispositifs selon l'invention,

- la figure 2 illustre un profilé permettant la mise en oeuvre du dispositif selon l'invention, le plan de coupe correspondant à la ligne II-II de la figure 1,

- la figure 3 est une vue en coupe selon III-III de la figure 1,

- la figure 4 est une vue de-dessus d'un premier mode de réalisation de pièce de liaison du dispositif selon l'invention,

- la figure 5 en est une vue de-dessous,

- la figure 6 en est une vue en bout, et

- les figures 7 et 8 illustrent la mise en oeuvre du dispositif selon l'invention.

La figure 9 est une vue de dessus analogue à la figure 4 d'un second mode de réalisation de pièce de liaison du dispositif selon l'invention,

la figure 10 en est une vue de dessous et

la figure 11 en est une vue en bout.

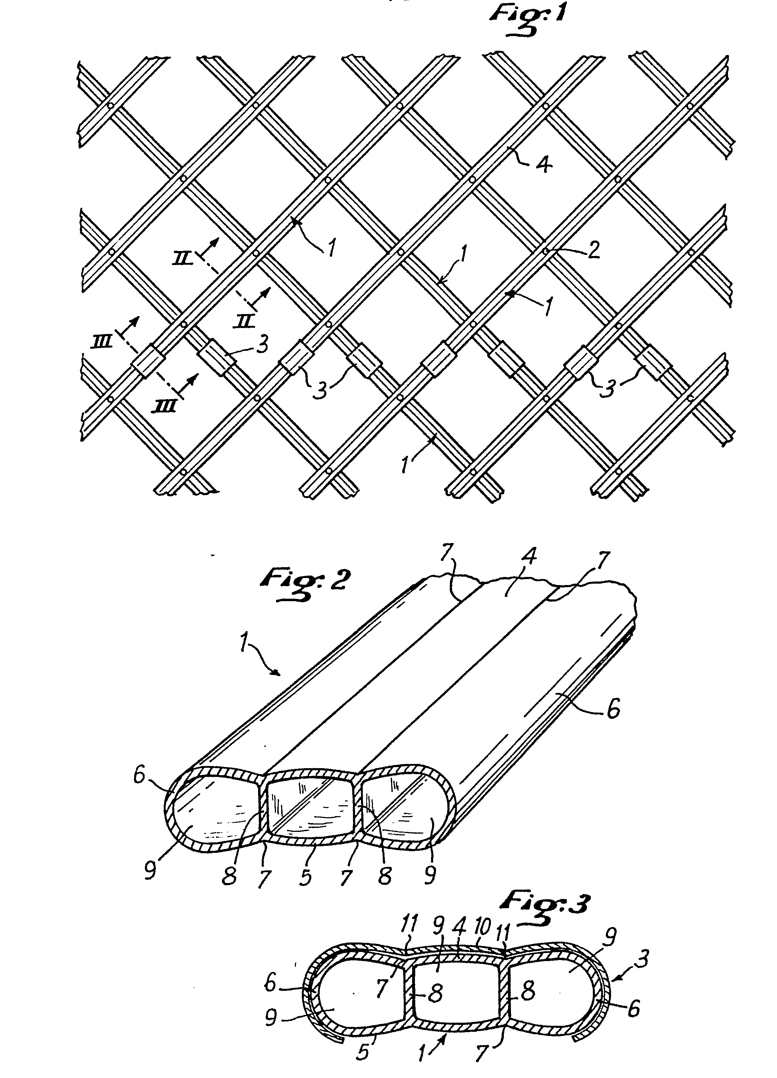

On voit sur la figure 1 un treillage réalisé en mettant en oeuvre des dispositifs selon l'invention, le treillage comprenant des rangées de profilés 1 dont la forme apparaît le mieux sur la figure 2. Les profilés sont disposés en rangées croisées, des tiges de fixation 2 étant prévues aux points de croisement.

On a illustré sur la figure 1 quelques pièces de liaison 3 des dispositifs selon l'invention que l'on décrira plus en détail dans ce qui suit.

Dans le mode de réalisation illustré le profilé 1 présente une forme creuse aplatie avec une face frontale 4, une face arrière 5 et deux flancs latéraux convexes 6. Dans les faces frontale 4 et arrière 5, sont réalisées deux rainures longitudinales 7 dans le prolongement de cloisons 8 définissant dans le profilé des conduits longitudinaux 9 au nombre de trois dans l'exemple illustré.

En se référant maintenant plus particulièrement aux figures 3 à 6, on voit la structure d'une pièce de liaison 3 selon un premier mode de réalisation du dispositif selon l'invention.

La pièce de liaison 3 présente, comme on le voit sur les figures 3 et 6, la forme générale d'un C allongé présentant une âme 10 présentant sur sa face interne deux nervures longitudinales 11 correspondant à des rainures 12 de sa face extérieure, l'âme 10 se prolongeant par deux ailes repliées 13.

La configuration de la pièce de liaison 3 correspond ainsi à la section du profilé pour permettre l'engagement de ladite pièce sur le profilé, la position d'engagement finale étant illustrée à la figure 3.

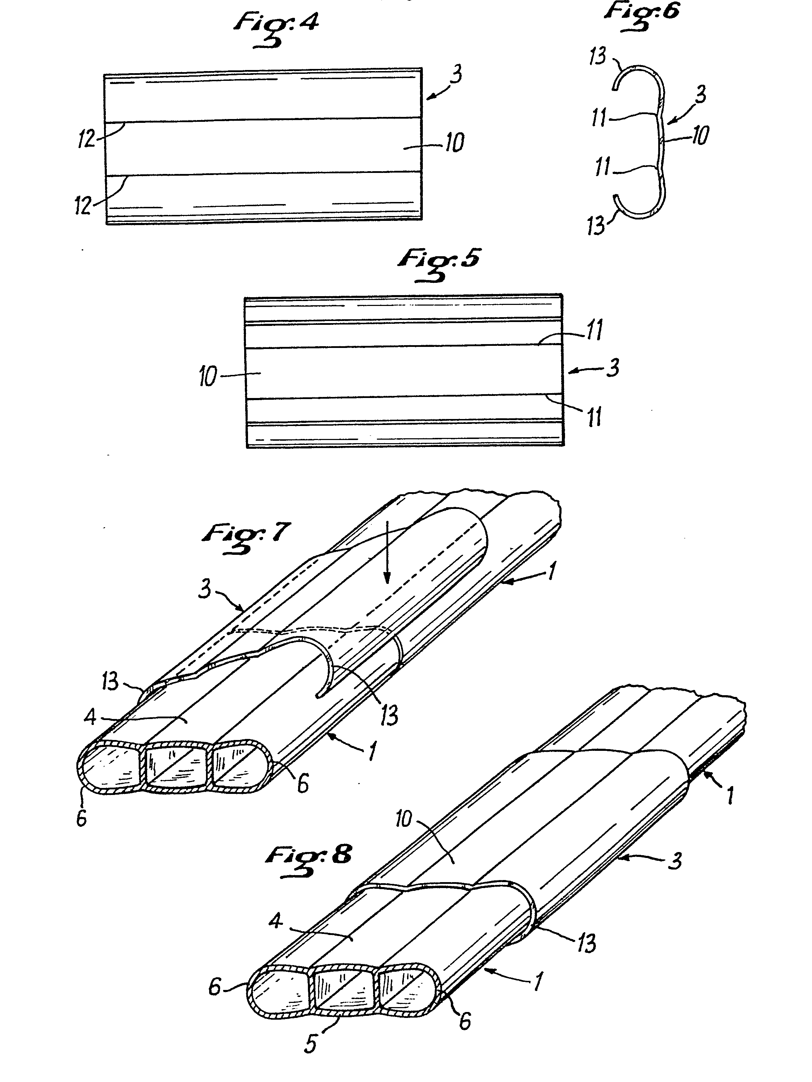

Pour atteindre cette position on procède comme illustré à la figure 7 en mettant bout-à-bout deux profilés 1, dont l'un peut notamment avoir été fixé au préalable sur un mur après quoi on met en place une pièce de liaison 3 par une de ses ailes repliées 13 contre un flanc latéral 6 de chacun des profilés mis bout-à-bout, la pièce de liaison 3 recouvrant la jonction entre les profilés. On exerce alors un appui dans le sens matérialisé par la flèche sur la figure 7 provoquant un pivotement de la pièce 3 autour d'un axe longitudinal défini par le contact de l'aile 13 de gauche sur la figure 7 avec le flanc 6 correspondant des profilés pour provoquer l'engagement par encliquetage de l'autre aile 13, la position finale étant illustrée dans la figure 8 ou en coupe dans la figure 3.

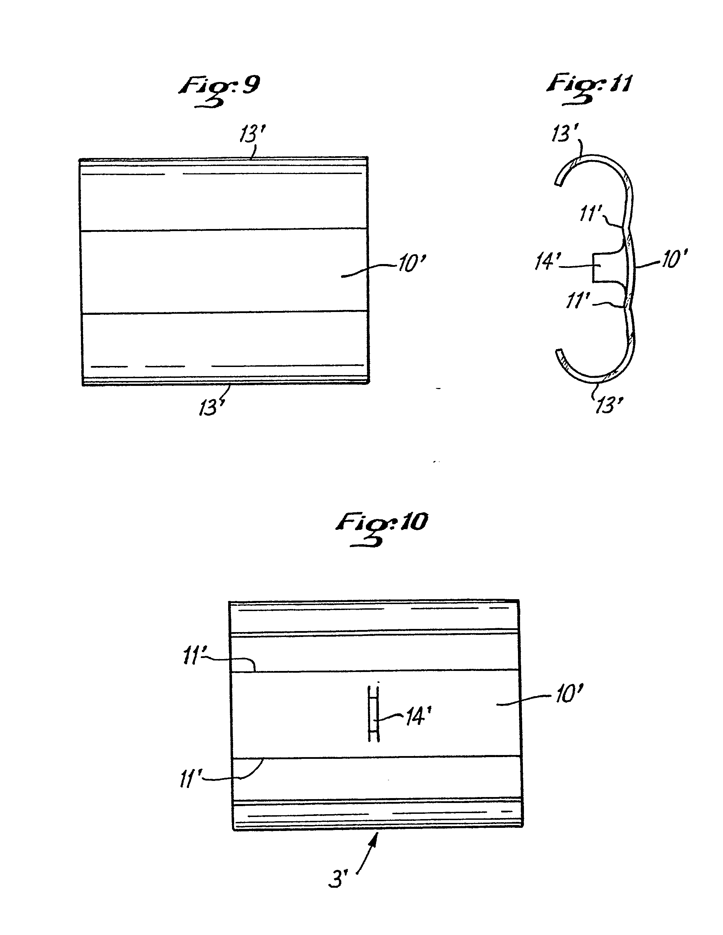

On se réfère maintenant aux figures 9 à 11 qui illustrent un second mode de réalisation de structure de pièce de liaison 3' du dispositif selon l'invention.

Les mêmes éléments que ceux du premier mode de réalisation portent les mêmes chiffres de référence munis de l'indice '.

On voit que la pièce de liaison est dans ce mode de réalisation plus courte que la pièce 3 du premier mode de réalisation et comporte en outre une languette de faible épaisseur 14' en saillie de la face intérieure de son âme 10', ladite languette 14' étant disposée parallèlement aux faces d'extrémité de la pièce de liaison 3' sensiblement à mi-distance de ces extrémités. On comprend que cette languette 14' vient se disposer lors de la mise en place de la pièce de liaison sur les profilés 1 entre les faces d'extrémité en regard des profilés et constitue pour la pièce de liaison 3' une butée l'empêchant de coulisser sur les profilés 1 lorsque notamment le serrage de la pièce de liaison sur les profilés se révèle insuffisant.

Bien que l'invention ait été décrite en liaison avec des modes de réalisation particuliers, il est bien évident qu'elle n'y est nullement limitée et qu'on peut lui apporter de nombreuses variantes et modifications sans pour autant sortir ni de son cadre ni de son esprit. En particulier il doit être clair que l'invention n'est nullement limitée à la forme particulière du profilé illustré.

- 5 -

0156714

<u>REVENDICATIONS</u>

1. Dispositif d'alignement et de liaison de profilés, notamment en matière plastique, pour la réalisation de treillages, caractérisé par le fait qu'il comprend une pièce de liaison (3, 3'), de préférence en matière plastique, susceptible d'être engagée sur les extrémités de deux profilés (1) successifs, ladite pièce de liaison présentant une âme (10, 10') dont la face intérieure présente un profil correspondant au profil de la face frontale (4) des profilés et deux ailes latérales (13, 13') repliées dont l profil correspond au profil des flancs latéraux (6) desdits profilés.

2. Dispositif selon la revendication 1, caractérisé par le fait que les profilés (1) présentent des flancs latéraux (6) convexes, la pièce de liaison (3, 3') présentant sensiblement la forme d'un C allongé, la courbure des ailes (13, 13') de ladite pièce correspondant à celle des flancs (6) des profilés, la longueur desdites ailes étant déterminée de façon que, en position assemblée, les extrémités des ailes s'étendent sensiblement au niveau de la face arrière (5) des profilés.

3. Dispositif selon l'une quelconque des revendications 1 et 2, caractérisé par le fait que les profilés et la pièce de liaison sont réalisés en une même matière plastique.

4. Dispositif selon la revendication 3, caractérisé par le fait que les profilés et la pièce de liaison sont réalisés en chlorure de polyvinyle.

5. Dispositif selon l'une quelconque des revendications précédentes, caractérisé par le fait qu'il comporte en outre une languette (14') disposée parallèlement aux faces d'extrémité de la pièce de liaison (3') en saillie de la face intérieure de l'âme (10') de celle-ci, ladite languette étant disposée de préférence sensiblement à mi-distance des faces d'extrémité de ladite pièce de liaison.

6. Dispositif selon la revendication 5 caractérisé par le fait que la pièce de liaison est réalisée en une matière plastique différente de celle des profilés.

7. Dispositif selon la revendication 6 caractérisé par le fait que la pièce de liaison est réalisée en polyéthylène.

8 . Procédé pour la mise en oeuvre du dispositif selon l'une quelconque des revendications précédentes, caractérisé par le fait qu'après avoir mis en place bout-à-bout deux profilés, on met en place au niveau des extrémités des deux profilés une pièce de liaison, en engageant une des ailes de ladite pièce autour d'un des flancs latéraux des deux profilés mis bout-à-bout, puis on exerce un appui frontal sur ladite pièce au voisinage de son aile opposée de manière à engager ladite aile opposée, par encliquetage, sur le flanc latéral opposé des profilés.

1/3 0156714

Fig.1

Fig.2

Fig.3

Fig.4

Fig.6

Fig.5

Fig.7

Fig.8

2/3

0156714

0156714

Fig. 9

13'

10'

13'

Fig. 11

13'

11'

14'          10'

11'

13'

Fig. 10

11'

14'          10'

11'

3'

Office européen
des brevets

**RAPPORT DE RECHERCHE EUROPEENNE**

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| X | US-A-3 000 658 (SPROUSE) <br> * En entier * <br><br> --- | 1 | A 01 G 9/12 <br> F 16 B 7/04 |
| X | DE-A-2 739 990 (DAIMLER-BENZ) <br> * Revendication 1; page 3, dernier paragraphe - page 4, paragraphe 2; figures 1-4 * | 1 | |
| A | | 8 | |
| | ----- | | |

DOMAINES TECHNIQUES
RECHERCHES (Int. Cl 4)

A 01 G
F 16 B
E 06 B

Le present rapport de recherche a ete établi pour toutes les revendications

| Lieu de la recherche | Date d'achèvement de la recherche | Examinateur |
|---|---|---|
| LA HAYE | 17-06-1985 | HERYGERS J.J. |